# EUROPÄISCHE PATENTSCHRIFT

(11) **EP 2 339 199 B1**
(45) Veröffentlichungstag und Bekanntmachung des Hinweises auf die Patenterteilung: **26.08.2015**
(21) Anmeldenummer: 10015720.5
(22) Anmeldetag: 16.12.2010
(51) Int. Cl.: F16D 66/02

(54) **Isolierkörper für einen Verschleißanzeiger**
Insulating body for wear sensor
Corps isolant d'un capteur d'usure

(30) Priorität: 18.12.2009 DE 102009059706; 21.12.2009 DE 102009060018; 22.02.2010 DE 102010008860
(43) Veröffentlichungstag der Anmeldung: 29.06.2011
(73) Patentinhaber: PEX Automotive GmbH, 72793 Pfullingen (DE)
(72) Erfinder: Köstler, Andreas, 70619 Stuttgart (DE); Kohler, Hartmut, 72285 Pfalzgrafenweiler (DE)
(74) Vertreter: Witte, Weller & Partner Patentanwälte mbB

(56) Entgegenhaltungen:
- EP-A1- 0 464 347
- EP-A1- 0 884 497
- EP-A2- 0 937 906
- DE-U1-202008 013 226

## Beschreibung

### Gebiet der Erfindung

Die Erfindung betrifft einen Isolierkörper für einen Verschleißanzeiger nach dem Oberbegriff des Anspruchs 1.

### Stand der Technik

Für Bremsbeläge von Fahrzeugbremsen sind Verschleißsensoren oder Verschleißanzeiger bekannt, welche unterschiedliche Techniken verwenden, um einen fortschreitenden Verschleiß des Bremsbelags anzuzeigen. Beispielsweise ist es bekannt, eine Signalleitung anzuordnen, welche bei zunehmendem Verschleiß in Kontakt mit der Bremsscheibe gerät und dadurch einen Stromkreis zu Masse hin schließt. Eine andere Möglichkeit ist, dass die Signalleitung angeordnet wird, sodass sie bei zunehmendem Verschleiß zerstört wird. Dabei wird die Signalleitung getrennt, sodass durch die Auftrennung der Signalleitung auch ein Verschleiß erkannt werden kann.

Signalleitungen werden um Isolierkörper gefädelt, um die Signalleitungen gegenüber der Bremsbelagrückenplatte zu isolieren. Bekannte Isolierkörper weisen Nuten auf, in welche Signalleitungen eingelegt werden.

Nachteilig an bekannten Isolierkörpern ist, dass die Signalleitung im aufgewickelten Zustand auf dem Isolierkörper nur begrenzt gegen mechanische Einflüsse geschützt ist. Dies kann dazu führen, dass die Signalleitung nicht erst bei zunehmendem Verschleiß, sondern bereits früher, auch bereits bei der Montage, zerstört wird, sodass es zu einer Fehlauslösung des Verschleißanzeigers, welcher die Signalleitung verwendet, kommen kann.

Aus der EP 0 464 347 A1 ist eine mehrstufige Reibbelagwarneinrichtung bekannt, bei der durch Spritzguss zuerst ein Einlegeteil hergestellt und mit einem elektrischen Leiter versehen wird. Anschliessend wird die Einheit aus Einlegeteil und elektrischem Leiter vorzugsweise durch Umspritzen ummantelt.

Aus der DE 20 2008 013 226 U1 ist ein Reibbelagverscheisssensor mit einem Sensorkörper bekannt, der einen in einer Bucht verlegten elektrischen Testleiter trägt und eine in zwei einander gegenüberliegende, erste Körperseitenflächen eingebrachte und die Körperspitze des Sensorkörpers umlaufende erste Nut aufweist. Dabei umschlingt die Leitung diesen Sensorkörper in der Nut vollständig.

Aus der EP 0 937 906 A2 und der EP 0 884 497 A1 ist jeweils ein Reibbelagverschleisssensor bekannt, bei dem eine entsprechende Signalleitung fast komplett in dem Sensorkörper verlegt ist. Die Signalleitung wird durch zwei Bohrungen an der Unterseite radial in den Sensorkörper eingeführt und umschlingt dort einen senkrecht zur Montagerichtung abstehenden Vorsprung, nachdem sie dann in Nuten in der Oberseite des Sensorkörpers abgeführt wird.

### Aufgabe

Aufgabe der Erfindung ist es, einen Isolierkörper für einen Verschleißanzeiger anzugeben, welcher gegenüber dem Stand der Technik verbessert ist, wobei insbesondere eine Fehlauslösung des Verschleißanzeigers durch eine geeignete Konstruktion des Isolierkörpers vermieden werden soll und der Zusammenbau erleichtert ist.

### Lösung der Aufgabe

Zur Lösung der Aufgabe führt ein Isolierkörper nach dem Hauptanspruch 1.

Der Zapfen ist so angeordnet, dass er eine Schlaufe der Signalleitung halten kann. Dieser Zapfen steht vorzugsweise von dem Isolierkörper im wesentlichen senkrecht ab und umfasst bei vorteilhaften Ausführungsformen einen pilzförmigen Kopf. Dies bietet den Vorteil, dass die Schlaufe sicher und definiert an dem Isolierkörper angeordnet werden kann.

Ferner ist der Zapfen so ausgerichtet, dass eine um den Zapfen und in einem Kanal aufgenommene Signalleitung zwischen dem Kanal und dem Zapfen um einen Winkel von mindestens 60° abgewinkelt ist. Noch bevorzugter beträgt der Winkel mindestens 70°, mindestens 85° oder mindestens 90° oder gar mehr als 90°. Auf diese Weise kann die Signalleitung sicher fixiert werden.

Typische Ausführungsformen der Erfindung weisen Rastpunkte auf, die an dem Isolierkörper angeordnet sind, welche geeignet sind, dass eine Klammer dort einrasten kann, die über eine um den Zapfen gelegte Schlaufe zur Sicherung der Signalleitung aufsteckbar ist. Vorzugsweise bedeutet aufsteckbar, dass die Klammer auf den Isolierkörper aufsteckbar ist. Dies bietet eine zusätzliche Sicherung der Signalleitung an dem Isolierkörper. Bei typischen Ausführungsformen ist die Klammer über den Zapfen aufsteckbar. Bevorzugt wird, dass der Zapfen ausgebildet ist, so dass er nicht in eine Ausnehmung in dem Isolierkörper für die Klammer hineinreicht. Dies bietet den Vorteil, dass der Zapfen bei einer Montage der Klammer geschützt ist. Der Zapfen wird bei dieser Ausführungsform vorzugsweise nicht von der Klammer überdeckt. Bevorzugte Zapfen weisen einen Winkel auf, der eine Aufnahme einer Signalleitung ermöglicht. Die Klammer sichert die Signalleitung gegen ein unbeabsichtigtes Lösen.

Vorzugsweise umfasst der Isolierkörper einen Stutzen zur Aufnahme eines Schutzschlauchs. Der Stutzen steht vorzugsweise im Wesentlichen senkrecht von einer Oberfläche des Isolierkörpers ab. Bevorzugte Ausführungen weisen einen zumindest teilweise konisch geformten Stutzen oder einen zumindest teilweise runden Stutzen auf. Die konische Form bietet den Vorteil, dass ein Schutzschlauch zuverlässig auf dem Stutzen angeordnet werden kann. Die konische Form verbessert die Fixierung. Auch auf einem runden Stutzen ist ein Schutzschlauch fixierbar. Außerdem bietet der Stutzen Schutz vor Vibrationen, da der Signalleiter, falls er an dem Stutzen anliegt und von dem Schutzschlauch umgeben ist, sicher geführt ist. Auf diese Weise können Vibrationsbrüche vermieden werden.

Vorteilhafterweise ist die Längsachse des Stutzens im wesentlichen parallel zu der Führungsrichtung der Signalleitung in der Aufnahme ausgerichtet. Die Führungsrichtung ist dabei die Richtung eines Kanals oder die Richtung der Signalleitung eingehängt in dem zumindest einen Haken zur Lagesicherung der Signalleitung. Bei typischen Ausführungsformen ist die Längsachse des Stutzens im wesentlichen senkrecht zu der Führungsrichtung der Signalleitung in der Aufnahme ausgerichtet. Diese Ausführungen bieten eine sichere Zuführung der Signalleitung für verschiedene Einbausituationen. "Im wesentlichen" bedeutet im Zusammenhang dieses Absatzes vorzugsweise einen Winkelbereich von +/-20°, bevorzugter +/-10°.

Bevorzugte Ausführungsformen des Isolierkörpers weisen einen Stutzen mit einer Ausnehmung auf. Besonders bevorzugt wird eine runde oder eine konische Form mit einer einseitigen Ausnehmung, die beispielsweise durch eine Abflachung erreicht werden kann. Die Ausnehmung ist vorzugsweise geeignet zur Aufnahme der Signalleitung. Auf diese Weise kann ein zylinderförmiger Schutzschlauch auf den Stutzen aufgeschoben werden, wobei die Signalleitung bzw. beide Einzeldrähte der Signalleitung in der Ausnehmung liegen. Die Ausnehmung kann durch eine Abflachung des vorzugsweise konisch geformten Stutzens ausgebildet sein, vorzugsweise ist die Ausnehmung geneigt abgeflacht, sodass auch durch die Abflachung eine Verjüngung des Stutzens erreicht wird. Besonders bevorzugte Ausführungsformen weisen eine Ausnehmung auf, welche eine Längsrichtung des Kanals parallel oder stetig fortsetzt. Auf diese Weise wird vermieden, dass die Signalleitung zusätzlich geknickt werden muss. Bei typischen Ausführungsformen sind Begrenzungsnasen auf einer Abflachung des Stutzens vorgesehen. Dies bietet den Vorteil, dass bei einer Montage eines Schlauches auf dem Stutzen die Signalleitung vor einer ungewollten Lageänderung geschützt ist.

Vorzugsweise ist die Längsachse des Stutzens im Wesentlichen parallel zu der Durchführung oder zu der Längsachse oder Montageachse des Isolierkörpers ausgerichtet. Dies bietet den Vorteil, dass eine von dem Stutzen wegführende Signalleitung in einer definierten Richtung parallel zu einem Montageuntergrund des Isolierkörpers weggeführt wird.

Bei typischen Ausführungsformen ist die Längsachse des Stutzens im Wesentlichen senkrecht zu der Durchführung oder zu der Längsachse oder Montageachse des Isolierkörpers ausgerichtet. Dies bietet den Vorteil, dass eine von dem Stutzen wegführende Signalleitung in einer definierten Richtung weggeführt wird, wobei die senkrechte Abführung zusätzlich den Vorteil einer kompakten Bauform bietet. "Im wesentlichen parallel" und "im wesentlichen senkrecht" schließen dabei vorzugsweise Winkel von plus/minus 20°, noch bevorzugter von plus/minus 10° jeweils um die Senkrechte oder die Parallele ein.

Vorzugsweise wird die Signalleitung durch einen geschlossenen Kanal des Isolierkörpers bereits während der Montage als auch im Betrieb gegen auftretende thermische und mechanische Einflüsse besser geschützt. Auf diese Weise werden Fehlauslösungen des Verschleißanzeigers verringert. Vorzugsweise deckt der Kanal mindestens 40 % der in den Isolierkörper eingelegten Länge der Signalleitung ab. Noch bevorzugter werden mindestens 50 % oder mindestens 60 % abgedeckt.

Der geschlossene Kanal ist vorzugsweise oval oder abgeflacht ausgeführt, sodass zwei Leiter der Signalleitung untergebracht werden können. Hintergrund ist, dass bei üblichen Verschleißanzeigern eine Signalleitung in einer Schlaufe um den Isolierkörper gelegt wird. Bei Unterbrechen der Signalleitung kann so auf einen Verschleiß geschlossen werden. Dabei wird die Schlaufe vorzugsweise durch den geschlossenen Kanal geführt.

Vorzugsweise ist der Kanal in einem Winkel zu einer Oberfläche einer den Kanal abdeckenden Decke des Isolierkopfes oder zu einer Montageachse des Isolierkörpers angeordnet. Die Montageachse entspricht vorzugsweise einer Längsachse des Isolierkörpers. Dabei bedeutet in einem Winkel, dass der Kanal nicht parallel zu der Oberfläche oder zu der Montageachse ausgerichtet ist. Mit einer solchen schrägen Führung des Signalleiters in dem Kanal innerhalb des Isolierkörpers wird eine vorgelagerte Position des Signalleiters ermöglicht. Dadurch kann ein Scheibengrad berücksichtigt werden. Auf diese Weise können vorzeitige Auslösungen verhindert werden. Der Winkel beträgt mindestens 1 °, bevorzugter mindestens 3° und noch bevorzugter mindestens 5°.

Vorzugsweise weist die Aufnahme zumindest einen Haken oder ein Führungselement zur Aufnahme der Signalleitung auf. Der Haken ist vorzugsweise im wesentlichen senkrecht zu der Lagerichtung der Signalleitung im eingebauten Zustand ausgerichtet. Dabei bedeutet im wesentlichen wiederum ein Winkelbereich von etwa +/-5°. Der Haken bietet den Vorteil, dass eine Lagesicherung der Signalleitung möglich ist. Die Aufnahme ist vorzugsweise auf einer Längsseite des Isolierkörpers angeordnet. Besonders bevorzugt ist die Aufnahme auf der Längsseite des Isolierkörpers angeordnet, welcher im eingebautem Zustand des Isolierkörpers in Richtung einer Bremsscheibe zeigt. Bei besonders bevorzugten Ausführungsformen sind mindestens zwei Haken, die vorteilhafterweise gegenläufig angeordnet sind, vorgesehen. Dadurch wird die Signalleitung abwechselnd von zwei Seiten hin gehalten. Die Haken bieten einen gewissen Schutz beim Einbau, wobei der Schutz dadurch erreicht wird, dass die Signalleitung sicher fixiert ist, so dass sie nicht ungewollt gequetscht werden kann. Die Haken können auch als zwei gegenüberstehende Überhänge bezeichnet werden, welche ein Abstehen der Signalleitung und dadurch mögliche Beschädigungen verhindern. Vorzugsweise sind die Haken oder die Überhänge soweit zurückverlagert, dass diese nicht vor Erreichen eines Meldepunktes durch eventuellen Scheibengrad oder bei Eintritt durch Verschleiss vorzeitig beschädigt werden können. Vorzugsweise sind die Überhänge zumindest so weit zurückverlagert, dass sie im eingebauten Zustand eine Bremsscheibe nicht berühren, bevor die Signalleitung durch die Bremsscheibe beschädigt werden kann.

Allgemein wird bevorzugt, dass die Aufnahme des Signalleiters in den Isolierkörper gegenüber einer Montageachse oder einer Längsachse des Isolierkörpers geneigt ist. Dies bietet die Möglichkeit, die Signalleitung gegenüber einer Beschädigung durch einen Scheibengrad zu schützen. Der Scheibengrad entsteht dadurch, dass auch die Bremsscheibe im Laufe ihrer Lebensdauer im Bereich des Eingriffs der Bremsklötze abgetragen wird, so dass die Oberfläche der Bremsscheibe nicht mehr vollständig eben ist. Da der Isolierkörper und der dazugehörige Verschleissanzeiger zusammen mit dem Bremsbelag die Dicke der Scheibe am Eingriff des Bremsbelags messen sollen, muss sichergestellt werden, dass ein eventuell daneben, d.h., radial daneben liegender Bereich der Bremsscheibe nicht eine Beschädigung des Signalleiters hervorruft. Dies wird durch die schräge Führung des Signalleiters in der Aufnahme erreicht.

Vorteilhafterweise weist der Isolierkörper eine Ausformung auf. Die Ausformung ist auf der Seite angeordnet, welche im eingebauten Zustand des Isolierkörpers zur Bremsscheibe zeigt. Die Ausformung dient dazu, die oben genannte Schräge herzustellen. Die Ausführung ist vorzugsweise zwischen dem Zapfen und einem gegenüberliegenden Ende des Isolierkörpers angeordnet. Dabei ist die Ausformung vorzugsweise in der Nähe des Zapfen-seitigen Endes des Isolierkörpers angeordnet.

Vorteilhafterweise weist die Ausformung eine Ausnehmung zur Aufnahme der Signalleitung auf. Da die Signalleitung vorzugsweise als Schlaufe um den Zapfen gelegt wird, weisen die Ausformungen vorzugsweise zwei Ausnehmungen auf. Dadurch wird die Signalleitung in Verbindungen mit dem Zapfen und der Aufnahme in ihrer Lage gesichert.

Ein Aspekt der Erfindung betrifft einen Verschleißanzeiger für eine Fahrzeugbremse mit einem Isolierkörper in einer der oben beschriebenen erfindungsgemäßen und bevorzugten Ausführungsformen und mit einer in den Isolierkörper eingelegten Signalleitung. Die Signalleitung ist als Schlaufe durch den Kanal geführt und um den Zapfen geführt, wobei der Zapfen die Schlaufe hält. Vorzugsweise ist an den Rastpunkten eine Klammer eingehängt. Die Klammer stützt sich vorzugsweise an dem Zapfen ab.

Bevorzugte Verschleißanzeiger weisen einen Schutzschlauch auf, welcher die Signalleitung im Bereich des Stutzens umschließt und der auf den Stutzen aufgesteckt ist. Dieser Schutzschlauch bietet den Vorteil, dass Brüche der Signalleitung vermieden werden.

### Kurze Beschreibung der Zeichnungen

Nachfolgend wird ein bevorzugtes Ausführungsbeispiel der Erfindung anhand einiger schematischer Zeichnungen beschrieben, wobei die Zeichnungen zeigen:
- Fig. 1: zeigt einen erfindungsgemäßen Isolierkörper in einer ersten schematischen und perspektivischen Ansicht;
- Fig. 2: zeigt den Isolierkörper der Fig. 1 in einer weiteren schematischen Perspektiv-Ansicht aus einer Richtung, welche der Ansicht der Fig. 1 im Wesentlichen entgegengesetzt ist;
- Fig. 3: zeigt einen erfindungsgemäßen Verschleißanzeiger mit dem Isolierkörper der Figuren 1 und 2 zusammen mit einer eingelegten Signalleitung in einer schematischen und perspektivischen Ansicht;
- Fig. 4: zeigt den in der Fig. 3 gezeigten Verschleißanzeiger in einer schematischen Schnittansicht;
- Fig. 5: zeigt eine weitere erfindungsgemäße Ausführungsform eines Isolierkörpers in einer ersten schematischen, perspektivischen Ansicht;
- Fig. 6: zeigt den Isolierkörper der Fig. 5 in einer zweiten schematischen, perspektivischen Ansicht, und
- Fig. 7: zeigt eine weitere Ausführungsform eines erfindungsgemässen Isolierkörpers in einer transparenten Seitenansicht;
- Fig. 8: zeigt die Ausführungsform der Figur 7 in einer transparenten Draufsicht;
- Fig. 9: zeigt eine weitere Ausführungsform eines erfindungsgemässen Isolierkörpers in einer transparenten Seitenansicht;
- Fig.10: zeigt eine weitere erfindungsgemässe Ausführungsform eines Isolierkörpers in einer transparenten perspektivischen schematischen Ansicht und
- Fig.11: zeigt die Ausführungsform der Figur 10 in einer schematischen transparenten Draufsicht.

### Beschreibung bevorzugter Ausführungsbeispiele

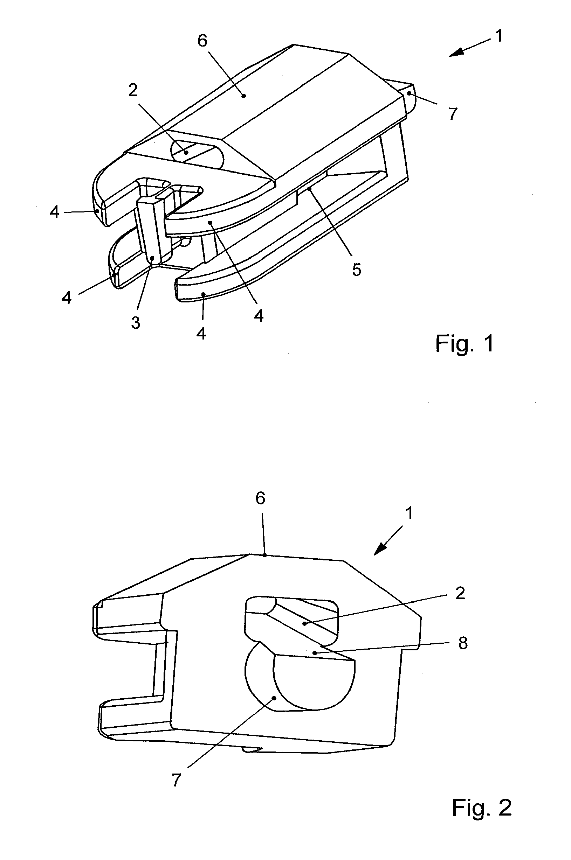

In der Fig. 1 ist ein erfindungsgemäßer Isolierkörper 1 in einer schematischen perspektivischen Ansicht gezeigt. Der Isolierkörper 1 ist für einen Verschleißanzeiger eines Bremsbelags geeignet und kann beispielsweise auf einer Bremsbelagrückenplatte montiert werden. Der Isolierkörper 1 weist einen geschlossenen Kanal 2 zur Durchführung einer Signalleitung auf. Die Signalleitung ist dazu vorgesehen, mit einer Schlaufe um einen Zapfen 3 gelegt zu werden, welcher eine Pilzform aufweist, um die Schlaufe der Signalleitung zu fixieren. Seitlich neben dem Zapfen 3 sind zum Schutz der um den Zapfen 3 gelegten Signalleiter Führungselemente 4 angeordnet. Seitlich des Isolierkörpers 1 sind in Ausnehmungen außerdem Rastpunkte 5 eingelassen, welche dazu vorgesehen sind, eine Klammer zu haltern, welche umlaufend um den Zapfen 3 zur besseren Fixierung der Signalleitung an dem Zapfen 3 angeordnet wird. In der Fig. 1 ist lediglich ein Rastpunkt 5 gezeigt, der andere Rastpunkt 5 liegt auf der gegenüberliegenden Seite des in der Fig. 1 gezeigten Isolierkörpers 1.

Der Kanal 2 wird durch eine abgeflachte Decke 6 begrenzt, welche bei einem fortschreitenden Verschleiß eines in der Nähe des Isolierkörpers 1 angeordneten Bremsbelags abgeschliffen wird, sodass schlussendlich auch eine in dem Kanal 2 angeordnete Signalleitung zerstört wird.

Weiterhin ist in der Fig. 1 noch ein Stutzen 7 angedeutet, welcher ebenfalls wie der Zapfen 3 in Richtung einer Montageachse des Isolierkörpers 1 ausgerichtet ist und gegenüberliegend zu dem Zapfen 3 an dem Isolierkörper 1 angeordnet ist. Der Stutzen 7 wird eingehender im Zusammenhang mit der Fig. 2 erörtert.

In der Beschreibung der Figuren 1 bis 4 werden für gleiche oder ähnliche Bauteile gleiche Bezugszeichen verwendet, wobei nicht in jeder Zeichnung jedes Teil mit einem Bezugszeichen versehen ist, um die Übersichtlichkeit zu erhöhen.

In der Fig. 2 ist der in der Fig. 1 gezeigte Isolierkörper 1 noch einmal in einer anderen schematischen perspektivischen Ansicht gezeigt. In der Fig. 2 ist auch gezeigt, dass der Kanal 2 gegenüber der Decke 6 und gegenüber einer Montagerichtung des Isolierkörpers 1 um etwa 10° geneigt ist. Dies bietet den Vorteil, dass der Isolierkörper 1 entsprechend einer zu erwartenden Abnutzung eines Bremsbelags ausgestaltet ist, sodass es nicht zu einer frühzeitigen Auslösung des Verschleißanzeigers kommt.

Der Stutzen 7 ist konisch ausgebildet und weist außerdem eine abgeflachte Seite 8 auf, welche sich stetig zu einer Unterseite des Kanals 2 fortsetzt. Dies bietet den Vorteil, dass eine in dem Kanal 2 angeordnete Signalleitung durch den Stutzen 7 so abgestützt ist, dass kein Knick auftritt. Die konische Form des Stutzens 7 bietet eine gute Befestigungsmöglichkeit für einen auf den Stutzen 7 aufgeschobenen Schutzschlauch. Die Abflachung 8 bildet eine Ausnehmung in dem Stutzen 7.

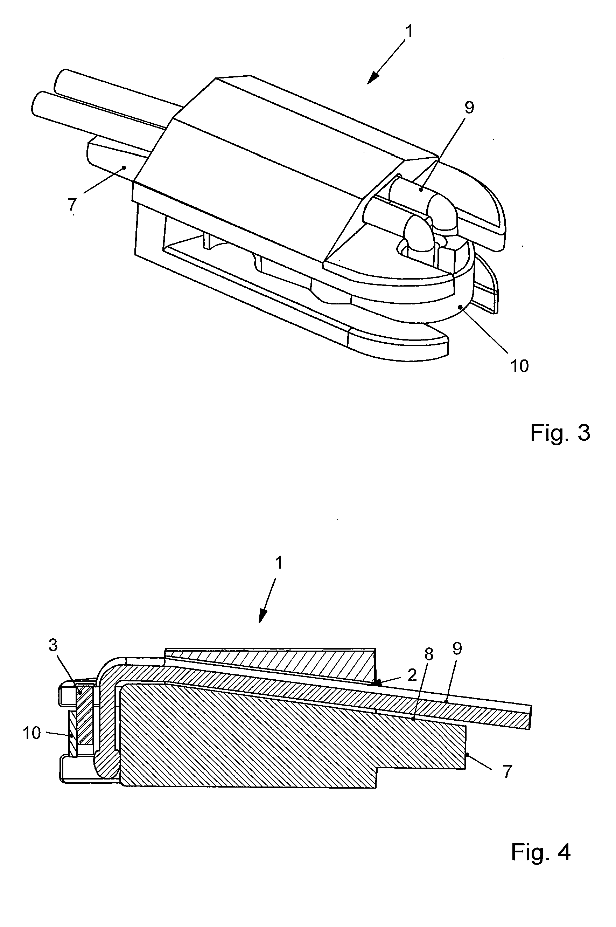

In der Fig. 3 ist ein erfindungsgemäßer Verschleißanzeiger gezeigt, der den Isolierkörper 1 der Figuren 1 und 2 umfasst. In dem Isolierkörper 1 ist eine Signalleitung 9 aufgenommen, welche schlaufenförmig um den Zapfen 3 gelegt ist. Die Signalleitung 9 führt außerdem mit einem durch die Schlaufe gebildeten Doppelstrang durch den Kanal 2. In der Fig. 3 nicht gezeigt ist ein auf die Signalleitung und den Stutzen 7 aufgeschobener Schutzschlauch.

Allerdings ist in der Fig. 3 eine eingehängte Klammer 10 des Verschleißanzeigers gezeigt, welche sich in den Rastpunkten 5 (siehe Fig. 1) festkrallt. Die Klammer 10 bietet einen zusätzlichen Halt für die Signalleitung 9, welche um den Zapfen 3 geschlungen ist.

In der Fig. 4 ist der Verschleißanzeiger der Fig. 3 nochmals in einer schematischen Schnittansicht gezeigt, wobei deutlich zu erkennen ist, dass sich die Unterseite des Kanals 2 in der Abflachung 8 des Stutzens 7 fortsetzt. Auf diese Weise wird sichergestellt, dass die Signalleitung 9 maximal geschützt wird.

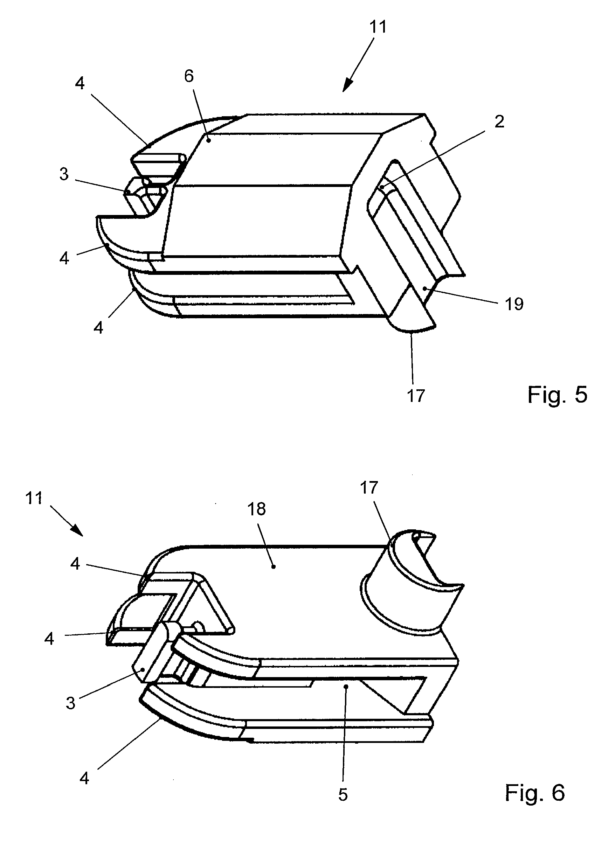

Die Fig. 5 und 6 zeigen eine weitere erfindungsgemäße Ausführungsform eines Isolierkörpers 11 in schematischen, perspektivischen Ansichten. Bei der Beschreibung der Fig. 5 und 6 wird auf die Beschreibung der Fig. 1 bis 4 Bezug genommen, wobei für gleiche oder ähnliche Teile gleiche Bezugszeichen verwendet werden, wobei diese Teile nicht vollständig noch einmal erläutert werden.

Der Isolierkörper 11 weist einen Stutzen 17 auf, welcher im Wesentlichen senkrecht zu der Richtung des Kanals 2 angeordnet ist. Zu bedenken ist allerdings, dass der Kanal 2 wiederum in einem Winkel zu der abgeflachten Decke 6 angeordnet ist, wobei wiederum der Stutzen 17 senkrecht, und zwar genau senkrecht, zu der abgeflachten Decke 6 angeordnet ist. Der Stutzen 17 steht senkrecht von einem Boden 18 des Isolierkörpers 11 ab und ermöglicht eine in Bezug auf die Längsachse des Isolierkörpers 11 quer verlaufende Abführung der in den Kanal 2 eingelegten Signalleitung. Dabei kann der Stutzen 17 auch für die Befestigung eines Isolierschlauches dienen. Der Stutzen 17 weist eine Ausnehmung 19 auf, die es erlaubt, die Signalleitung geschützt zu führen. Die Ausnehmung 19 ist auch in das Gehäuse des Isolierkörpers 11 eingelassen, sodass die Signalleitung vollständig geschützt verlegt werden kann.

Die Ausführungsform der Figuren 5 und 6 bietet den besonderen Vorteil, dass sie bei beengten Einbausituationen verwendet werden kann. Außerdem ist auch bei dieser Ausführungsform ein besonders wirkungsvoller Schutz der Signalleitung gegeben.

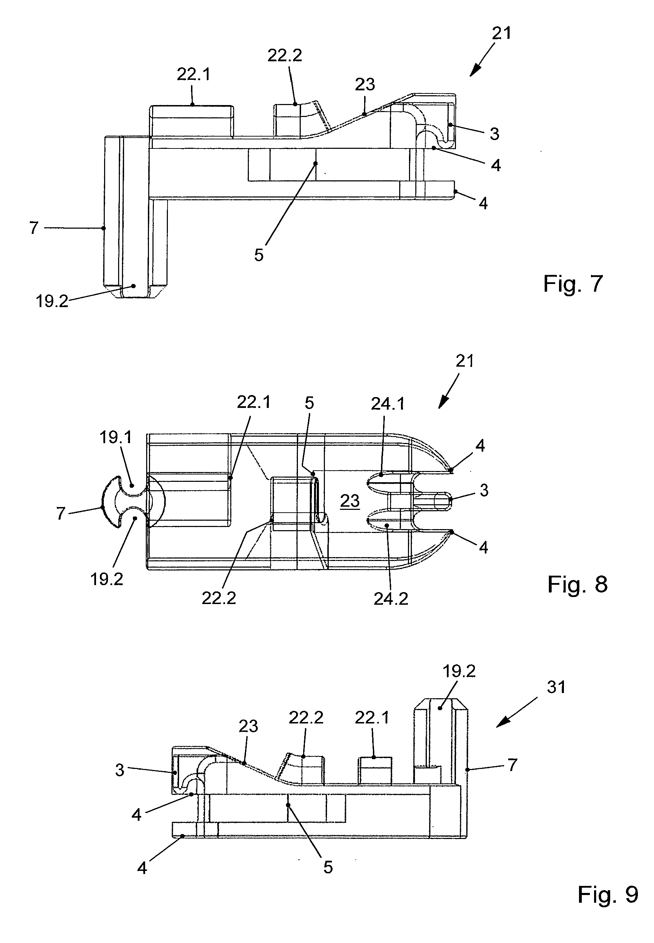

In der Figur 7 ist eine erfindungsgemässe Ausführungsform eines Isolierkörpers 21 gezeigt. Bei der Beschreibung der Figur 7 werden für gleiche oder ähnliche Teile, wie in den Figuren 1 bis 6 gleiche Bezugszeichen verwendet und ggf. nicht noch einmal beschrieben. Die Figur 7 ist eine schematische Strichzeichnung, welche den Isolierkörper transparent darstellt.

Der Isolierkörper 21 umfasst wie der Isolierkörper 11 der Figuren 5 und 6 einen Stutzen 7, welcher gegenüber einer Längsachse des Isolierkörpers 21 um 90° geneigt ist. In Zusammensicht mit der Figur 8, welche ebenfalls den Isolierkörper 21 zeigt, ist zu erkennen, dass der Stutzen 7 des Isolierkörpers 21 zwei gegenüberliegende Ausnehmungen 19.1, 19.2 umfasst, in welche die Signalleitung eingelegt werden kann. Die zwei gegenüberliegenden Ausnehmungen 19.1, 19.2 haben den Vorteil, dass die Signalleitung nach Aufschieben eines Schlauches gesichert ist. Es sollte angemerkt werden, dass die Figur 8 eine Draufsicht zeigt, die ebenfalls transparent und schematisch ist.

Der Isolierkörper 21 umfasst ebenfalls Rastpunkte 5 zum Fixieren einer Klammer. Allerdings ist bei dem Isolierkörper 21 der Zapfen 3 derart ausgebildet, dass er bündig mit den Führungselementen 4 abschliesst. Dadurch ist der Zapfen 3 vor Beschädigungen beim Aufsetzen der Klammer geschützt.

Eine Signalleitung kann um den Zapfen 3 gelegt werden und unter zwei Haken 22.1, 22.2, die auch als Führungselemente bezeichnet werden können, gelegt werden. Die Haken 22.1, 22.2 sind entfernt voneinander angeordnet und gegenläufig angeordnet, so dass die an dieser Stelle doppelläufige Signalleitung von zwei Seiten gehalten wird.

Der Isolierkörper 21 umfasst eine Ausformung 23, welche dazu dient, die Signalleitung an einer Stelle, an welcher später eine Detektion eines Bremsenverschleisses stattfinden soll, in Richtung der Bremsscheibe (in der Figur 7 wäre diese oben angeordnet) führt. Durch die Ausformung ist es möglich, die Signalleitung unter den Haken 22.1, 22.2 zu schützen, falls die Bremsscheibe einen Scheibengrad aufweist.

In der Ausformung 23 sind zwei Ausnehmungen 24.1, 24.2 vorgesehen, welche zur Führung der Signalleitung in Richtung des Zapfens 3 einerseits und in Richtung der Haken 22.1, 22.2 andererseits dienen. Auf diese Weise ist die Signalleitung sicher lagefixiert.

Der besondere Vorteil des Isolierkörpers 21 ist dessen einfache Montage und ausserdem der Schutz des Zapfens 3. So wird bei Einsätzen einer Klammer in die Rastpunkte 5 durch die Klammer lediglich dafür gesorgt, dass die Signalleitung nicht von dem Zapfen 3 rutschen kann. Dies genügt allerdings, um die Signalleitung vollständig auf dem Isolierkörper 21 zu fixieren, wobei berücksichtigt werden sollte, dass die Signalleitung ausserdem durch einen auf den Stutzen 7 aufgeschobenen Schutzschlauch fixiert ist.

In der Figur 9 ist eine weitere Ausführungsform eines Isolierkörpers 31 gezeigt, wobei der Isolierkörper 31 ebenfalls in einer transparenten schematischen Seitenansicht gezeigt ist. Der Isolierkörper 31 der Figur 9 unterscheidet sich von dem Isolierkörper 21 der Figuren 7 und 8 dadurch, dass der Stutzen 7 in einer anderen Richtung vorgesehen ist. Es sollte wiederum bemerkt werden, dass für gleiche oder ähnliche Teile gleiche Bezugszeichen wie in den vorhergehenden Figuren verwendet werden.

Allgemein wird darauf hingewiesen, dass der Zapfen 3 der Isolierkörper 21 und 31 auch als Abstützung des Federelements, d.h. der Klammer, welche in den Rastpunkten eingesetzt wird, dient.

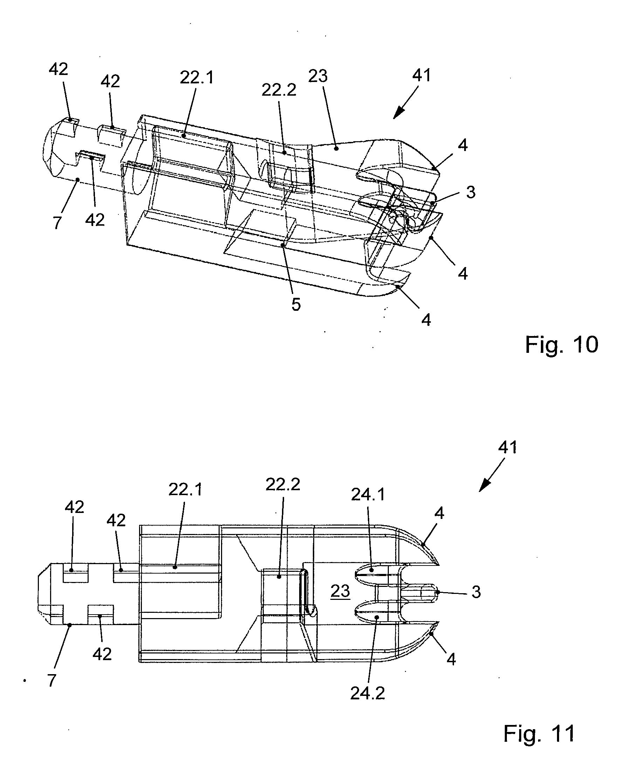

In den Figuren 10 und 11 ist eine weitere Ausführungsform eines erfindungsgemässen Isolierkörpers 41 gezeigt, welcher ebenso schematisch transparent dargestellt ist. Die Figur 10 zeigt eine perspektivische schematische Ansicht und die Figur 11 zeigt eine schematische Draufsicht. Wiederum werden für gleiche oder ähnliche Teile gleiche Bezugszeichen wie bei der Beschreibung der vorhergehenden Figuren verwendet.

Der Isolierkörper 41 unterscheidet sich von den Isolierkörpern 21 und 31 dadurch, dass er einen Stutzen 7 umfasst, welcher in Längsrichtung oder in Montagerichtung des Isolierkörpers 41 ausgerichtet ist. Weiterhin weist der Stutzen 7 des Isolierkörpers 41 Nasen 42 auf, welche eine abgeflachte Seite des Stutzens 7 begrenzen. Die Nasen 42 dienen der Führung der Signalleitung, so dass sich ein Schutzschlauch leicht über den Stutzen 7 und die Signalleitung schieben lässt.

Die Erfindung bietet den Vorteil, dass es während der Montage und im Betrieb nicht zu einem unbeabsichtigten Bruch der Signalleitung kommt, beispielsweise aufgrund mechanischer oder thermischer Belastungen. Jedenfalls wird durch die Erfindung die Wahrscheinlichkeit einer solchen Fehlauslösung des Verschleißanzeigers weitgehend minimiert.

## Patentansprüche

1. Isolierkörper mit einer Montage- und Längsachse für einen Verschleißanzeiger eines Bremsbelags mit einer Aufnahme (2, 22.1, 22.2) für eine Signalleitung (9) und einem Zapfen (3), um den die Signalleitung (9) in einer Schlaufe gelegt ist, wobei der Zapfen (3) so ausgerichtet ist, dass eine um den Zapfen (3) und in der Aufnahme (2, 22.1, 22.2) aufgenommene Signalleitung (9) zwischen der Aufnahme und dem Zapfen (3) um einen Winkel von mindestens 60° abgewinkelt ist, **dadurch gekennzeichnet, dass** der Zapfen (3) von dem Isolierkörper im wesentlichen in Richtung der Montage- und Längsachse senkrecht absteht und neben dem Zapfen (3) Führungselemente (4) angeordnet sind.

2. Isolierkörper nach Anspruch 1, **dadurch gekennzeichnet, dass** der Zapfen (3) eine Pilzform aufweist.

3. Isolierkörper nach Anspruch 1 oder 2, **gekennzeichnet durch** Rastpunkte (5) für eine Klammer (10), die über eine um den Zapfen (3) gelegte Schlaufe der Signalleitung (9) aufsteckbar ist.

4. Isolierkörper (nach einem der vorhergehenden Ansprüche, **gekennzeichnet durch** einen Stutzen (7, 17) zur Aufnahme eines Schutzschlauchs.

5. Isolierkörper nach Anspruch 4, **dadurch gekennzeichnet, dass** der Stutzen (7, 17) gegenüberliegend zu dem Zapfen (3) an dem Isolierkörper (1) angeordnet ist.

6. Isolierkörper nach Anspruch 4 oder 5, **dadurch gekennzeichnet, dass** der Stutzen (7, 17) zumindest teilweise rund oder zumindest teilweise konisch geformt ist.

7. Isolierkörpernach wenigstens einem der Ansprüche 4 bis 6, **dadurch gekennzeichnet, dass** der Stutzen (17) eine Ausnehmung (19, 19.1, 19.2) aufweist.

8. Isolierkörper nach einem der Ansprüche 4 bis 7, **dadurch gekennzeichnet, dass** eine Längsachse des Stutzens (7, 17) im wesentlichen parallel zu der Führungsrichtung der Signalleitung (9) in der Aufnahme (2, 22.1, 22.2) oder im wesentlich senkrecht zu der Führungsrichtung der Signalleitung (9) in der Aufnahme (2, 22.1, 22.2) ausgerichtet ist.

9. Isolierkörper nach einem der vorhergehenden Ansprüche, **dadurch gekennzeichnet, dass** die Aufnahme einen geschlossenen Kanal (2) zur Durchführung der Signalleitung (9) aufweist.

10. Isolierkörper nach Anspruch 9, **dadurch gekennzeichnet, dass** der Kanal (2) in einem Winkel zu einer Oberfläche einer den Kanal (2) abdeckenden Decke (6) des Isolierkörpers (1, 11) und/oder zu einer Montageachse des Isolierkörpers (1, 11) angeordnet ist.

11. Isolierkörper nach Anspruch 9 oder 10, **dadurch gekennzeichnet, dass** der Kanal (2) mindestens 40% der in den Isolierkörper (1, 11) eingelegten Länge der Signalleitung (9) abdeckt.

12. Isolierkörper nach einem der vorhergehenden Ansprüche, **dadurch gekennzeichnet, dass** die Aufnahme zumindest einen Haken (22.1, 22.2) zur Aufnahme der Signalleitung (9) umfasst.

13. Isolierkörper nach Anspruch 12, **dadurch gekennzeichnet, dass** die Haken (22.1, 22.2) gegenläufig angeordnet sind, so dass die an dieser Stelle doppelläufige Signalleitung von zwei Seiten gehalten ist.

14. Isolierkörper nach einem der vorhergehenden Ansprüche, **gekennzeichnet durch** eine Ausformung (23) zwischen dem Zapfen (3) und einem gegenüberliegenden Ende des Isolierkörpers.

15. Isolierkörper nach Anspruch 14, **dadurch gekennzeichnet, dass** die Ausformung zumindest eine Ausnehmung (24.1, 24.2) zur Aufnahme der Signalleitung (9) aufweist.

16. Verschleißanzeiger für eine Fahrzeugbremse mit einem Isolierkörper (1, 11, 21, 31, 41) nach einem der Ansprüche 1 bis 15 und einer in den Isolierkörper (1, 11, 21, 31, 41) eingelegten Signalleitung (9).

17. Verschleißanzeiger nach Anspruch 16 mit einer in den Rastpunkten (5) eingehängten Klammer (10).

18. Verschleißanzeiger nach Anspruch 16 oder 17, **gekennzeichnet durch** einen Schutzschlauch, der die Signalleitung im Bereich des Stutzens (7, 17) umschließt und der auf den Stutzen (7, 17) aufgesteckt ist.

## Claims

1. Insulating body having a mounting and longitudinal axis for a wear indicator of a brake lining with a receptacle (2, 22.1, 22.2) for a signal line (9) and a pin (3) around which the signal line (9) is arranged in a loop, wherein the pin (3) is oriented such that a signal line (9) received around the pin (3) and in the receptacle (2, 22.1, 22.2) is angled at an angle of at least 60° between the receptacle and the pin (3), **characterized in that** the pin (3) projects substantially perpendicular in a direction of the mounting and longitudinal axis and that guiding elements (4) are arranged next to the pin (3).

2. Insulating body of claim 1, **characterized in that** the pin (3) has the shape of a mushroom.

3. Insulating body of claim 1 or 2, **characterized by** snap-in points (5) for a bracket (10) which can be arranged over a loop of the signal line (9) which is arranged around the pin (3).

4. Insulating body according to any preceding claim, **characterized by** a socket (7, 17) for receiving a protecting sheath.

5. Insulating body of claim 4, **characterized in that** the socket (7, 17) is arranged opposite to the pin (3) at the insulating body (1).

6. Insulating body of claim 4 or 5, **characterized in that** the socket (7, 17) is at least partially round or at least partially conical.

7. Insulating body of any of claims 4 to 6, **characterized in that** the socket (17) comprises a recess (19, 19.1, 19.2).

8. Insulating body of any of claims 4 to 7, **characterized in that** a longitudinal axis of the socket (7, 17) is substantially parallel to the guiding direction of the signal line (9) in the receptacle (2, 22.1, 22.2) or is oriented substantially perpendicular to the guiding direction of the signal line (9) in the receptacle (2, 22.1, 22.2).

9. Insulating body of any preceding claim, **characterized in that** the receptacle comprises a closed channel (2) for feeding-through of the signal line (9).

10. Insulating body of claim 9, **characterized in that** the channel (2) is arranged at an angle to a surface of a cover (6) of the insulating body (1, 11) covering the channel (2) and/or to a mounting axis of the insulating body (1, 11).

11. Insulating body of claim 9 or 10, **characterized in that** the channel (2) covers at least 40 % of the length of the signal line (9) inserted into the insulating body (1, 11).

12. Insulating body of any preceding claim, **characterized in that** the receptacle comprises a hook (22.1, 22.2) for receiving the signal line (9).

13. Insulating body of claim 12, **characterized in that** the hooks (22.1, 22.2) are oriented in opposed directions so that the signal line, which runs in two directions at this place, is held at two sides.

14. Insulating body of any preceding claim, **characterized by** a form (23) between the pin (3) and the opposite end of the insulating body.

15. Insulating body of claim 14, **characterized in that** the form has at least one recess (24.1, 24.2) for receiving the signal line (9).

16. Wear indicator for the brake of a vehicle comprising an insulating body (1, 11, 21, 31, 41) according to any of claims 1 to 15 and a signal line (9) inserted in the insulating body (1, 11, 21, 31, 41).

17. Wear indicator of claim 16 comprising a bracket (10) inserted into the snap-in points (5).

18. Wear indicator of claim 16 or 17, **characterized by** a protecting sheath which encloses the signal line in the area of the socket (7, 17) and which is put onto the socket (7, 17).

## Revendications

1. Corps isolant avec un axe longitudinal et de montage pour un indicateur d'usure d'une garniture de frein avec un logement (2, 22.1, 22.2) pour un câble de transmission de signal (9) et avec un tenon (3) autour duquel le câble de transmission de signal (9) est placé dans une boucle, le tenon (3) étant conçu de telle sorte qu'un câble de transmission de signal (9) reçu autour du tenon (3) et dans le logement (2, 22.1, 22.2) est coudé selon un angle d'au moins 60° entre le logement et le tenon (3), **caractérisé en ce que** le tenon (3) ressort verticalement hors du corps pour l'essentiel en direction de l'axe longitudinal et de montage et que des éléments de guidage (4) sont disposés à côté du tenon (3).

2. Corps isolant selon la revendication 1, **caractérisé en ce que** le tenon (3) prend une forme de champignon.

3. Corps isolant selon la revendication 1 ou 2, **caractérisé par** la présence de points d'arrêt (5) pour un crampon (10) pouvant être enfiché via une boucle du câble de transmission de signal (9) placée autour du tenon (3).

4. Corps isolant selon l'une quelconque des revendications précédentes, **caractérisé par** la présence d'un manchon (7, 17) servant au logement d'un tuyau flexible de protection.

5. Corps isolant selon la revendication 4, **caractérisé en ce que** le manchon (7, 17) est disposé au niveau du corps isolant (1) à l'opposé du tenon (3).

6. Corps isolant selon la revendication 4 ou 5, **caractérisé en ce que** le manchon (7, 17) prend une forme au moins en partie ronde ou au moins en partie conique.

7. Corps isolant selon au moins l'une quelconque des revendications 4 à 6, **caractérisé en ce que** le manchon (17) comporte un évidement (19, 19.1, 19.2).

8. Corps isolant selon l'une quelconque des revendications 4 à 7, **caractérisé en ce qu'**un axe longitudinal du manchon (7, 17) est orienté pour l'essentiel parallèlement à la direction de guidage du câble de transmission de signal (9) dans le logement (2, 22.1, 22.2) ou pour l'essentiel perpendiculairement à la direction de guidage du câble de transmission de signal (9) dans le logement (2, 22.1, 22.2).

9. Corps isolant selon l'une quelconque des revendications précédentes, **caractérisé en ce que** le logement comporte un canal (2) fermé pour le passage du câble de transmission de signal (9).

10. Corps isolant selon la revendication 9, **caractérisé en ce que** le canal (2) est disposé selon un certain angle par rapport à la surface d'un cache (6), recouvrant le canal (2), du corps isolant (1, 11) et/ou à un axe de montage du corps isolant (1, 11).

11. Corps isolant selon la revendication 9 ou 10, **caractérisé en ce que** le canal (2) recouvre au moins 40 % de la longueur, insérée dans le corps isolant (1, 11), du câble de transmission de signal (9).

12. Corps isolant selon l'une quelconque des revendications précédentes, **caractérisé en ce que** le logement comprend au moins un crochet (22.1, 22.2) servant à recevoir le câble de transmission de signal (9).

13. Corps isolant selon la revendication 12, **caractérisé en ce que** les crochets (22.1, 22.2) sont disposés à l'opposé, de sorte que le câble de transmission de signal passant en double en ce point soit maintenu des deux côtés.

14. Corps isolant selon l'une quelconque des revendications précédentes, **caractérisé par** un façonnage (23) prévu entre le tenon (3) et une extrémité opposée du corps isolant.

15. Corps isolant selon la revendication 14, **caractérisé en ce que** le façonnage comporte au moins un évidement (24.1, 24.2) pour recevoir le câble de transmission de signal (9).

16. Indicateur d'usure pour un frein de véhicule avec un corps isolant (1, 11, 21, 31, 41) selon l'une quelconque des revendications 1 à 15 et un câble de transmission de signal (9) placé dans le corps isolant (1, 11, 21, 31, 41).

17. Indicateur d'usure selon la revendication 16, avec un crampon (10) accroché dans les points d'arrêt (5).

18. Indicateur d'usure selon la revendication 16 ou 17, **caractérisé par** la présence d'un tuyau flexible de protection ceignant le câble de transmission de signal dans la région du manchon (7, 17) et enfiché sur le manchon (7, 17).
